# EUROPEAN PATENT SPECIFICATION

(11) **EP 1 688 344 B1**
(45) Date of publication and mention of the grant of the patent: **29.04.2009**
(21) Application number: 06001561.7
(22) Date of filing: 25.01.2006
(51) Int. Cl.: B62M 1/02

(54) **Improved multifunctional pedaling motion bicycle**
Fahrrad mit multifunktionaler Fahrradpedale
Bicyclette avec pédalier polyvalente

(30) Priority: 02.02.2005 CN 200520001872 U; 22.11.2005 CN 200520133422 U
(43) Date of publication of application: 09.08.2006
(73) Proprietor: Chong, Ok Yeo, Jong Ro-Ku Seoul (KR)
(72) Inventor: Seol, Marn Taek, Yang Pyung-Gun Kyung Gi-Do (KR)
(74) Representative: Zeitler, Giselher

(56) References cited:
- WO-A-97/43168
- WO-A-03/101815
- CA-A1- 2 414 681
- US-A- 5 088 340

## Description

### BACKGROUND OF THE INVENTION

### 1. Field of the Invention

The present invention relates generally to an improved multifunctional pedaling motion bicycle, and in particular to a bicycle transmission that is controlled by a clutching device operable by fork-based control units to switch among a variety of exercising modes without the need of dedicated hub for switching.

### 2. The Related Art

Bicycles are often equipped with gear-shifting devices to change speed. The known gear-shifting devices, however, provide very limited advantage to bicycle-based exercising device. In Chinese Utility Model No. 91226879.4, the present inventor disclosed a transmission for multi-function bicycle, which provides a bicycle with operation modes other than the conventional pedaling operation, such as leverage exercise and independent operation of individual pedal. By means of the new ways of power transmission provided by the Chinese Utility Model, new modes for exercising or operating a bicycle can be effected, which is also applicable to bicycle-based exercising device, such as a stationary bike.

The device disclosed in the Chinese Utility Model, however, suffers the following disadvantages: (1) A dedicated rear hub is required in order to perform leverage exercise and the costs for the dedicated hub are high. (2) The dedicated rear hub has quite a weight, which causes troubles to the general consumers. (3) The transmission is prone to damages and failures.

In view of the above-discussed drawbacks, the present inventor has presented a different design that was disclosed in Chinese Utility Model No. 200520001872.6, which illustrates a bicycle transmission that is considered the previous version of the present invention. The bicycle transmission disclosed in the Chinese Utility Model is still subject to improvement, especially in respect of operation precision. Other known reference, such as US Patent No. 5,088,340, which is seen as the closest prior art according to the preamble of claim 1 and which is also filed by the present inventor, discloses a multipurpose transmission mechanism for bicycles. The device disclosed in the US Patent provides a transmission for bicycles that allows for three different types of transmissions, namely (1) lever transmission, (2) crank transmission, and (3) lever and crank alternative transmission. The transmission of the US Patent comprises a bottom bracket bearing axle that is freely rotatably mounted to a bottom bracket of a bicycle frame by means of bottom bracket bearing and carries cranks via clutch bearings at opposite ends so that the bottom bracket bearing axle is driven to rotate only when the two crank are simultaneously rotated in a specific direction. A chain wheel holder to which a chain wheel is mounted and a fixed lock wheel are respectively mounted to opposite ends of the bottom bracket bearing axle. An alternative wheel is mounted, via a bushing, to each of the cranks. Two chain lines of well measured length are connected between two chain wheels, which are mounted on an auxiliary axle, and the alternative wheels. A movable lock wheel is mounted on each crank and is axially movable with respect to the bottom bracket bearing axle so that the movable lock wheel can assume either a first position where the movable lock wheel is fixed to the alternative wheel, a second position wherein the movable lock wheel is not released from both the alternative wheel and the chain wheel holder/the fixed lock wheel, and a third position where the movable lock wheel is fixed to the chain wheel holder/the fixed lock wheel to thereby effect the above mentioned three types of transmission.

### SUMMARY OF THE INVENTION

Thus, the present invention is aimed to provide an improvement over the above-discussed bicycle transmission, which ensures precise operation of switching among a variety of operation modes

To achieve the above objectives, in accordance with the present invention, a transmission mechanism of bicycle is provided, comprising a clutch member that is manually controlled to move between and selectively engage primary and secondary control blocks to perform different modes of operation of the bicycle, including regular pedaling, independent pedaling of cranks, same-direction upward/downward movements of the cranks. The transmission mechanism has a simple and light-weighted structure and thus low cost and low failure risk with extended service life. Further, a variety of different operation modes can be performed without dedicated rear hub.

### BRIEF DESCRIPTION OF THE DRAWINGS

The present invention will be apparent to those skilled in the art by reading the following description of preferred embodiments thereof, with reference to the attached drawings, in which:

Figure 1 is an exploded view of a primary axle assembly of a bicycle transmission mechanism in accordance with the present invention;

Figure 2 is an exploded view of a secondary axle assembly of the bicycle transmission mechanism of the present invention;

Figure 3 is an exploded control mechanism of the bicycle transmission mechanism of the present invention;

Figure 4 is schematic plan view, partially taken away, showing the bicycle transmission mechanism of the present invention;

Figure 5 is a side elevational view showing a portion of a bicycle frame to which the control mechanism is mounted, and also showing the locations where the primary axle assembly and the secondary axle assembly are mounted to the frame;

Figure 6 is a perspective view, also showing the bicycle frame that supports the control mechanism and the locations of the primary axle assembly and the secondary axle assembly on the frame;

Figure 7 is a side elevational view showing a chain connecting a secondary chain wheel of the secondary axle assembly to a secondary control block;

Figure 7A is similar to Figure 7 but showing chains connecting another secondary chain wheel of the secondary axle assembly to another secondary control block and the bicycle frame;

Figure 8 is a plan view showing the bicycle transmission mechanism of the present invention set in an exercise mode;

Figure 8A is an enlarged view of a circled portion of Figure 8;

Figure 9 is a plan view showing the condition where pedals of the bicycle are of identical-direction upward/downward movement;

Figure 9A is a side elevational view corresponding to Figure 9;

Figure 10 is a plan view showing the condition where the pedals of the bicycle are of opposite-direction upward/downward movement;

Figure 10A is a side elevational view corresponding to Figure 10;

Figure 11 is a plan view showing the bicycle transmission mechanism of the present invention set in an independent mode;

Figure 11A is an enlarged view of a circled portion of Figure 11;

Figure 12 is a plan view showing the condition where each pedal of the bicycle is independently moved upward/downward;

Figure 12A is a side elevational view corresponding to Figure 12;

Figure 13 is a plan view showing the bicycle transmission mechanism of the present invention set in a regular pedaling mode;

Figure 13A is an enlarged view of a circled portion of Figure 13;

Figure 14 is a plan view showing the condition where pedals are driven in a regular way;

Figure 14A is a side elevational view corresponding to Figure 14;

Figure 15 is a plan view showing the bicycle transmission mechanism of the present invention subject to a reversed rotation;

Figures 15A is an enlarged view of a circled portion of Figure 15; and

Figure 16 is a perspective view illustrating spatial relationship between the secondary control block and a clutching ring.

### DETAILED DESCRIPTION OF THE PREFERRED EMBODIMENTS

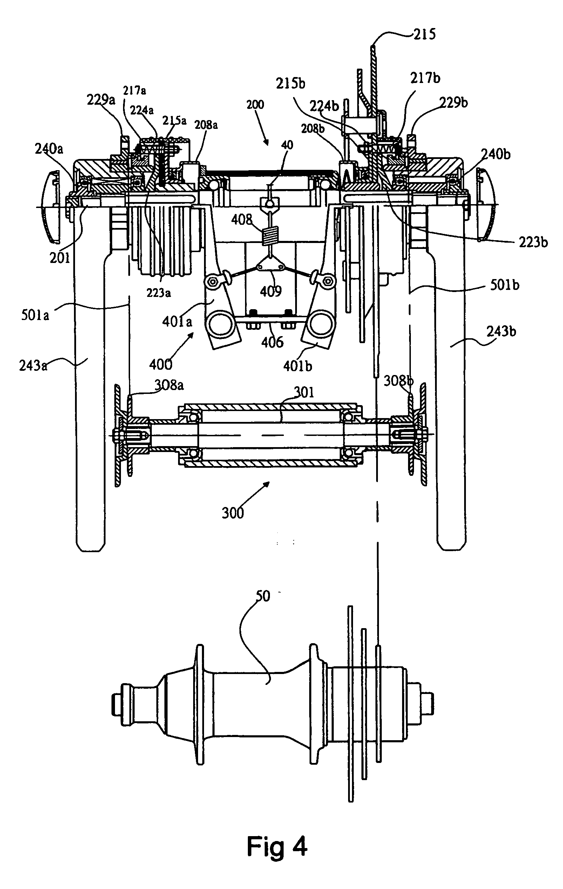

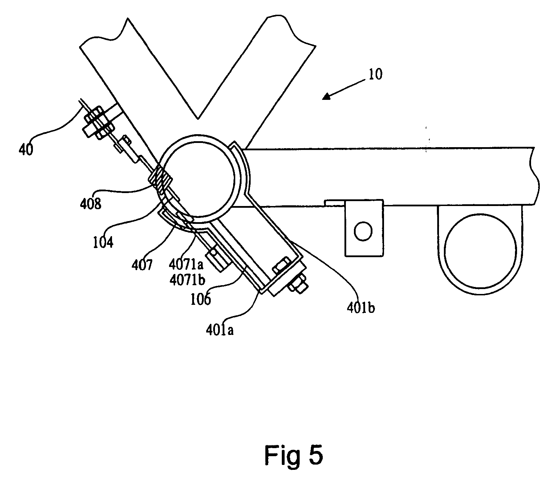

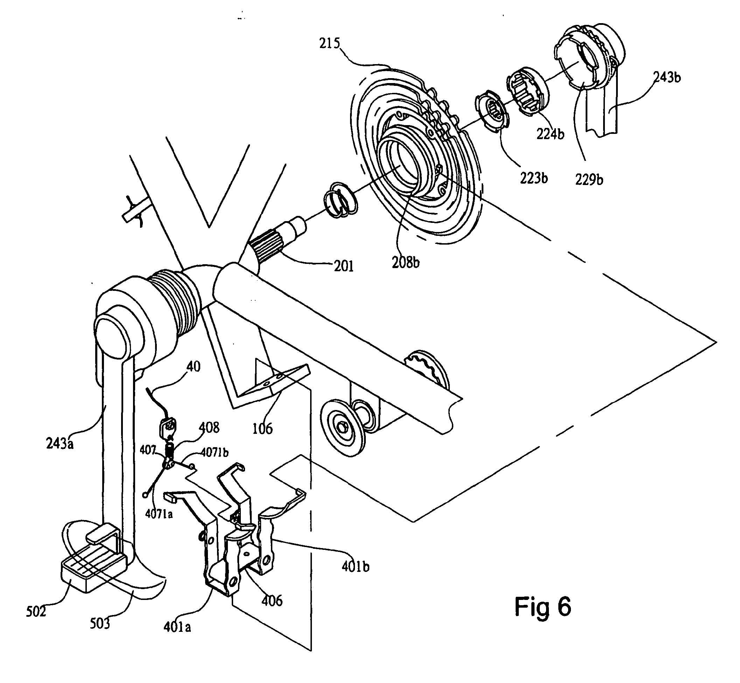

With reference to the drawings and in particular to Figures 4 and 5, a transmission mechanism constructed in accordance with the present invention is adapted to mount to a bicycle frame 10, especially a bottom bracket 104 of the frame 10. The bicycle frame 10 has two a crank shaft 201, which will also referred to as a "primary axle" hereinafter having opposite ends to which pedal cranks 243a, 243b are mounted, each pedal crank 243a, 243b carrying a pedal 502 (see Figure 6) to take driving force from the foot 503 of a rider and inducing a torque on the crank shaft (primary axle) 201. The transmission mechanism of the present invention is operable to switch the operation modes of pedaling among a "regular mode" in which the bicycle of the present invention can be pedaled as a regular bicycle wherein the pedal cranks 243a, 243b and pedals 502 undergo continuous forward (or clockwise) rotation, an "independent" mode, in which the pedal cranks 243a, 243b can be rotated independently, and an "exercise" mode in which, when operated, the pedal cranks 243a, 243b undergo reciprocal rotation. Subassemblies of the transmission mechanism will be described hereinafter.

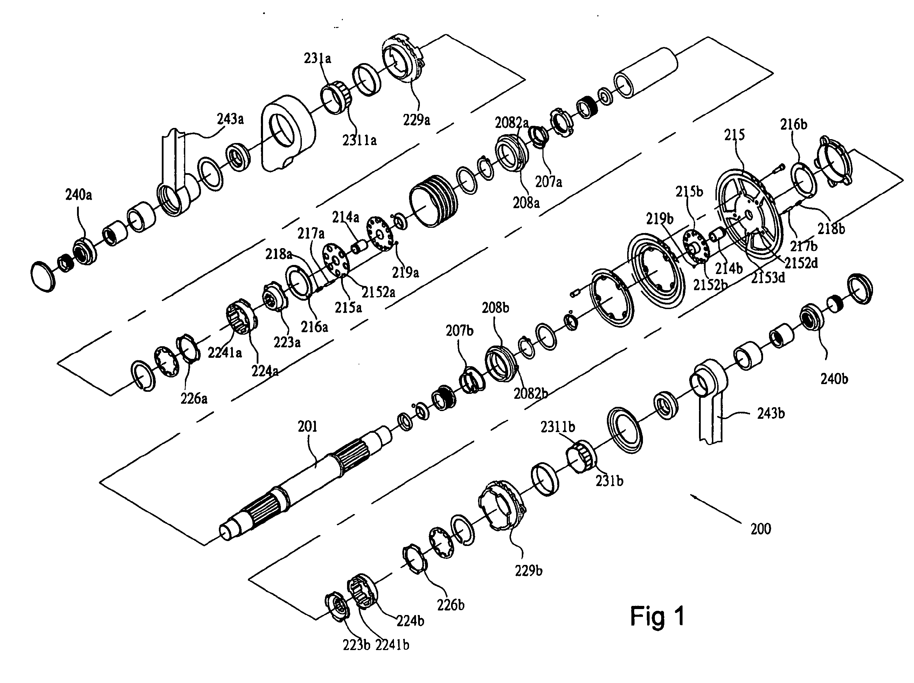

Referring in particular to Figure 1, which shows an exploded view of a pedal axle assembly of the transmission mechanism in accordance with the present invention, the pedal axle assembly, which will also be referred to as "primary axle assembly" hereinafter, is generally designated with reference numeral 200, comprising the primary axle (the crank shaft) 201, which as noted previously, has opposite ends coupled to the pedal cranks 243a, 243b, respectively, by fitting into a one-way bearing 240a, 240b received and fixed in each pedal crank 243a, 243b. The one-way bearings 240a, 240b allow torque to transmit from the pedals 502, through the pedal cranks 243a, 243b, to the primary axle 201 in a given rotational direction, such as forward or clockwise, but do not transmit the torque in an opposite direction, such as backward or counterclockwise. A chain wheel 215 is fixed to the primary axle 201 to be rotatable in unison therewith. In the embodiment illustrated, the chain wheel 215 is arranged next to one of the one-way bearings, for example the one-way bearing 240b, and is operatively coupled to a rear hub 50 (Figure 4) by a chain (not shown), whereby the torque applied to the primary axle 201 by the rider through the cranks 243a, 243b, is transmitted to the rear hub 50 for driving the bicycle.

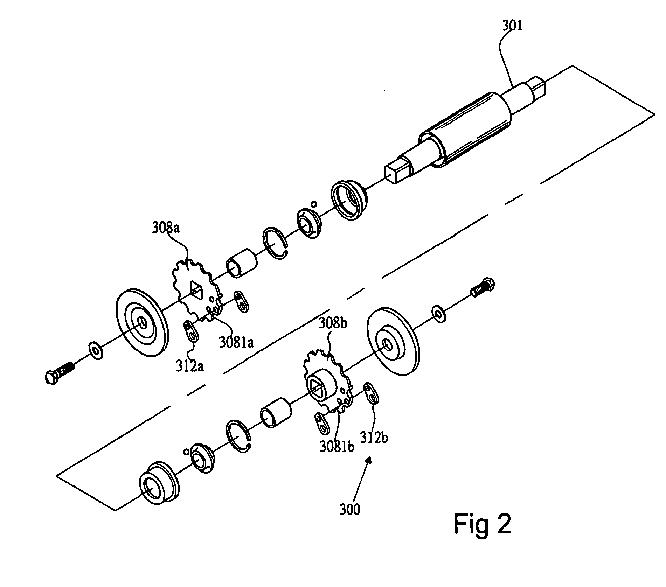

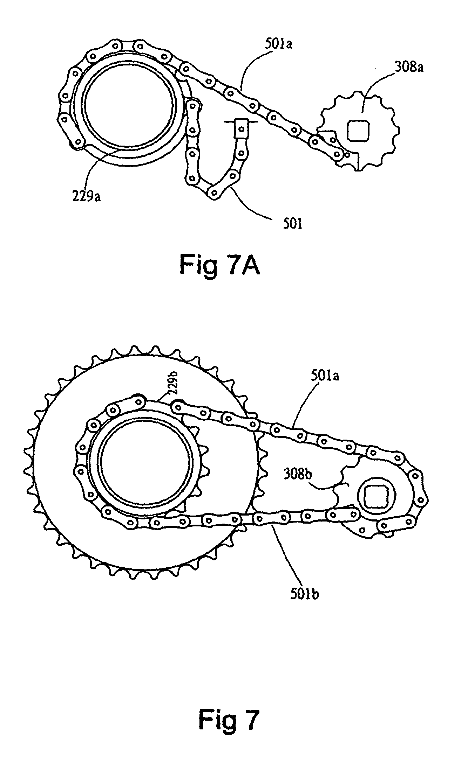

Also referring to Figures 2, 4, 7, and 7A, the transmission mechanism of the present invention comprises a secondary axle assembly 300, which is mounted to the bottom bracket 104 of the bicycle frame 10, preferably at a position behind the primary axle assembly 200 (as best seen in Figures 5 and 6). The secondary axle assembly 300 comprises a secondary axle 301 having opposite ends coupled to secondary chain wheels 308a, 308b, respectively, whereby the secondary chain wheels 308a, 308b are rotatable in unison with the secondary axle 301. Each secondary chain wheel 308a, 308b defines adjusting holes 3081a, 3081b to which fitting plates 312a, 312b are pivotally fixed for connection with ends of chains 501a, 501b. Opposite ends of the chains 501a, 501b are connected to secondary control blocks 229a, 229b to be further described. The secondary control block 229a is further connected to an end of the chain 502 and an opposite end of the chain 502 is fixed to the bicycle frame. The chains 502, 501a, 501b serve to limit the rotation angle of the reciprocal rotation performed in the exercise mode, which will be further described.

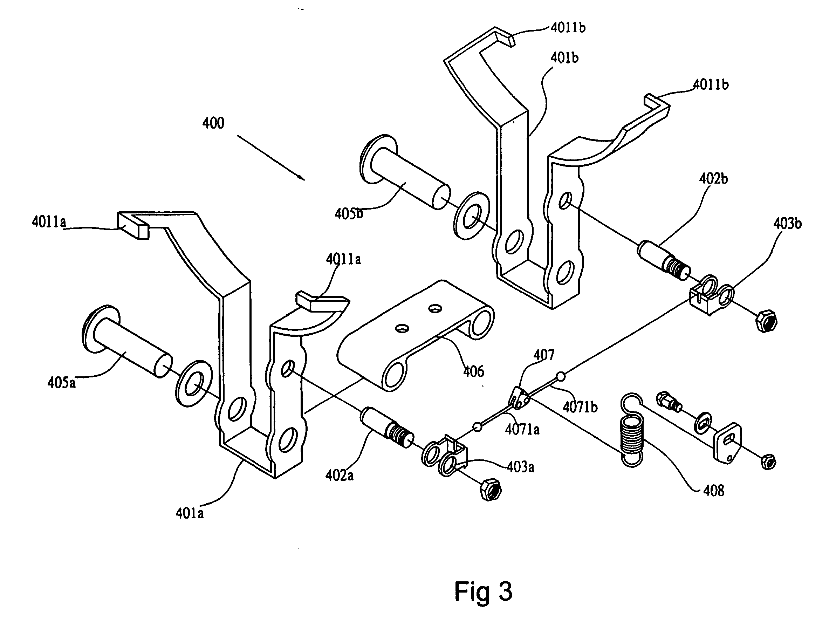

Also referring to Figures 3, 5, and 6, a control mechanism 400 is mounted to a control mechanism mount 106, which is a projection formed on the bottom bracket 104 of the bicycle frame 10. The control mechanism 400 comprises a fixed base 406 that is fixed to the control mechanism mount 106 of the bicycle frame by fasteners or other known means that is not shown in the drawings, and two engaging forks 401a, 401b pivoted to opposite ends of the fixed base 406 by pins 405a, 405b and spaced from each other to allow for rotation of the engaging forks 401a, 401b with respect to the fixed base 406, whereby the engaging forks 401a, 401b are movable among first and second extreme positions, which are respectively corresponding to the regular mode and the exercise mode, and an intermediate position between the extreme positions and corresponding to the independent mode. A three-way connector 407 is arranged between the two engaging forks 401a, 401b and is connected to the engaging forks 401a, 401b with wires 4071a, 4071b. Free ends of the wires 4071a, 4071b are connected to connection members 403a, 403b that are rotatably fixed to the engaging forks 401a, 401b by pivots 402a, 402b. The connector 407 is also connected to a pull wire 40 via a spring 408 for manual operation of the engaging forks 401 a, 401 b.

Referring particularly to Figure 4, the primary axle assembly 200 is mounted to the bottom bracket 104 of the bicycle frame 10 with the pedal cranks 243a, 243b located on opposite sides of the bottom bracket 104. The control mechanism 400 is also fixed to the bottom bracket 104 and is operatively coupled to the primary axle assembly 200 for controlling the operation of the primary axle assembly 200, with the aid of the secondary axle assembly 300, to selectively effect the regular operation mode, the exercise mode, and the independent mode.

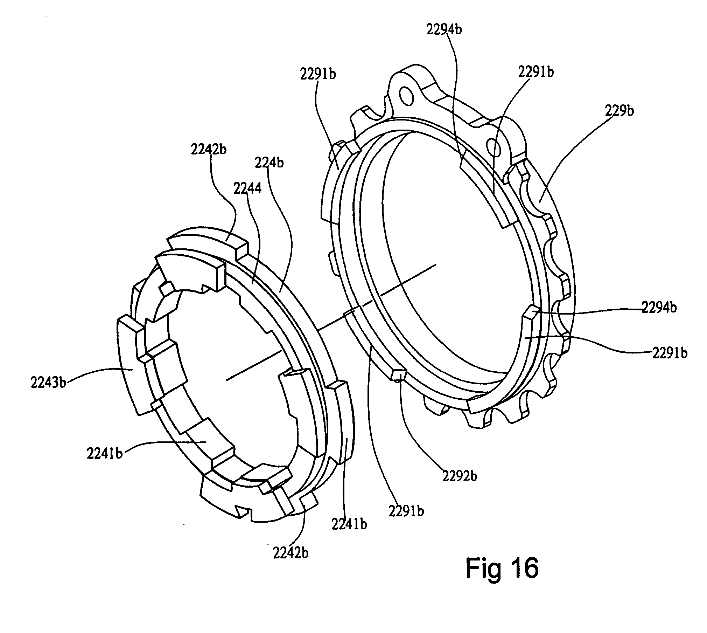

Before further explanation is given, it is to be noted first that the primary axle assembly 200 comprises a clutching ring 224a, 224b associated with each crank pedal 243a, 243 and a toothed ring key 226a, 226b, of which the function will be described later. As shown in Figure 1, the clutching ring 224a, 224b is separate from the toothed ring key 226a, 226b and are then fixed together. To simplify the manufacturing and assembly, as an alternative, and as shown in Figure 16, the clutching ring 224a, 224b and the toothed ring key 226a, 226b are integrated and combined together as a unitary member. To simplify the description that follows, the illustration is made with reference to the "combined" clutching ring and toothed ring key, which will also be referred to as "clutching ring" and designated with reference numeral 224a, 224b. In other words, the clutching ring 224a, 224b in all the drawings, except Figure 1, is a combination of the clutching ring 224a, 224b and the toothed ring key 226a, 226b of Figure 1. In this case, as shown in Figure 16, the clutching ring 224a, 224b comprises first and second circumferentially-spaced teeth 2243b, 2242b on opposite axial ends thereof with a circumferential groove 2244 formed therebetween. Thus, the second teeth 2242b replaces the place of the toothed ring key 226b.

The clutching ring 224a, 224b has inner teeth 2241a, 2241b movably fit over a toothed surface 2311 a, 2311b of a guide cylinder 231 a, 231 b tightly fit over and rotatable in unison with the pedal crank 243a, 243b. This allows the clutching ring 224a, 224b to axially movable with respect to the primary axle 201 and the pedal cranks 243a, 243b.

At an inbound side of the primary chain wheel 215, a driving collar 2082a, 208b and a driving disk 215a, 215b are coaxially mounted on and are axially movable along a tubular extension 214a, 214b. The tubular extension 214b is also fit into a bore 2153d of the primary chain wheel 215. The driving disk 215a, 215b is coupled to the clutching ring 224a, 224b, by axially-extending connection rods 217a, 217b, only one being visible in Figure 1. One end of the connection rod 217a, 217b is fixed to a holding ring 216a, 216b and an opposite end, which is threaded, extends through a hole 504 defined in the driving disk 215a, 215b and is fixed by for example a nut 219a, 219b. The connection rod 217b also axially and movably extends through a corresponding hole 2152d defined in the primary chain wheel 215.

The holding ring 216a, 216b is received in the circumferential groove 2244 of the clutching ring 224a, 224b. A biasing element 218a, 218b, preferably a helical spring encompassing the connection rod 217a, 217b, is arranged between the holding ring 216a, 216b, which is mounted to the and the driving disk 215a and the primary chain wheel 215 to provide a basing force therebetween, which ensures the relative position between the clutching ring 224a, 224b and the driving disk 215a, 215b and also allows the relative position to change under a sufficient axial load, which will be further described.

The driving collar 2082a, 208b is axially movable by the engaging fork 401a, 401 b between the first and second extreme positions and this will be further discussed. When the driving collar 2082a, 208b is axially moved, the clutching ring 224a, 224b is also allowed to move between the first and second extreme positions by being connected to the driving disk 215a, 215b by the connection rods 217a, 217b. In the first extreme position, the clutching ring 224a, 224b is engageable with a primary control block 223a, 223b and in the second extreme position, the clutching ring 224a, 224 is engageable with a secondary control block 229a, 229b. The primary and secondary control blocks 223a, 223b are located on opposite sides of the driving collar 2082a, 208b. The secondary control blocks 229a, 229b are drivingly coupled to the secondary chain wheels 308a, 308b of the secondary axle assembly 300 by the chains 501a, 501b, respectively.

Referring to Figures 5 and 6, the bottom bracket 104 of the bicycle frame 10 forms a projection serving as the control mechanism mount 106 to which the fixed base 406 that rotatably supports the engaging forks 401a, 401b, is fixed by any known means, such as bolt, rivet, and welding. A manual control (not shown) is mounted to the bicycle frame 10 and connected to the three-way connector 407 via the pull wire 40 that is connected to the connector 407 by the spring 408. Thus, the manual control allows a user to control and operate the engaging forks 401a, 401b via the three-way connector 407, which, as mentioned previously, is connected to the engaging forks 401 a, 401b by wires 4071a,407 1 b and the connection members 403a, 403b of the engaging forks 401a, 401b. For example, manually pulling or exerting a tension to the pull wire 40 causes the engaging forks 401a, 401b to approach each other, while releasing the pull wire 40 allows the engaging forks 401 a, 401 b to move away from each other.

To simplify the description, only parts that bear a reference label with a postfix of "b" will be demonstrated, while those having postfix "a" are corresponding counterpart having identical or functionally similar construction of which description may be omitted hereinafter.

Referring to Figure 6, the pedal cranks 243a, 243b transmit manual pedaling power or torque from the pedals 502 to the primary axle 201, which in turn rotates the primary chain wheel 215. The pivotal connection of the engaging forks 401 a, 401b to the base 406 of the control mechanism 400 allows the engaging forks 401a, 401b to move toward/away from each other when the pulling wire 40 is manually pulled or released. Each engaging fork 401 a, 401 b has two spaced limbs each forming a hooked end 4011a,4011b engageable corresponding notches506 (see Figure 1) formed in the driving collars 2082a, 208b, respectively. This makes the driving collars 2082a, 208b movable in unison with the engaging forks 401a, 401b when the engaging forks 401a, 401b are driven by the pull wire 40. In other words, by manually pulling/releasing the pull wire 40, the engaging forks 401a, 401b are moved (by being rotated with respect to the base 406), and the movements of the engaging forks 401a, 401b in turn cause the driving collars 2082a, 208b to axially move between the first extreme position where the primary control blocks 223a, 223b are located and the second extreme position where the secondary control block 229a, 229b are located, due to the engagement between the hooked ends 4011a,4011b of the engaging forks 401a, 401b and the notches 2082b of the driving collars 2082a, 208b. The driving collars 2082a, 208b are thus positionable at (1) the first extreme position where the driving collars 2082a, 208b are in driving engagement with the primary control blocks 223a, 223b to effect the regular mode, (2) the second extreme position where the driving collars 2082a, 208b are in driving engagement with the secondary control blocks 229a, 229b to effect the exercise mode, and an intermediate position between the first and second extreme positions, where the driving collars 2082a, 208b do not engage with both the primary control blocks 223a, 223b and the secondary control blocks 229a, 229b and an "independent" operation mode is effected by which the two pedal cranks 243a, 243b can be rotated independently.

Preferably, a biasing element 207a, 207b, such as a spring, is arranged between each driving collar 2082a, 208b and the primary axle 201 that biases the driving collar 2082a, 208b toward the second extreme position where the driving collar 2082a, 208b engages the second control block 229a, 229b.

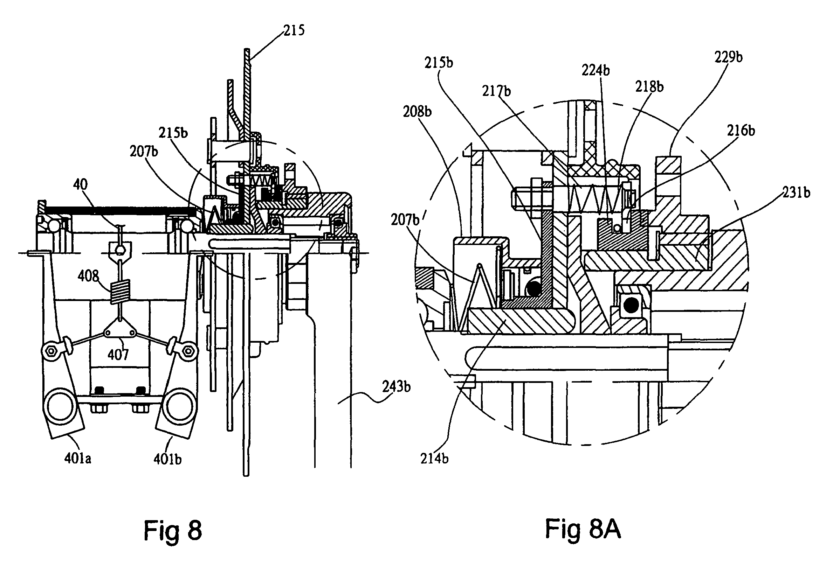

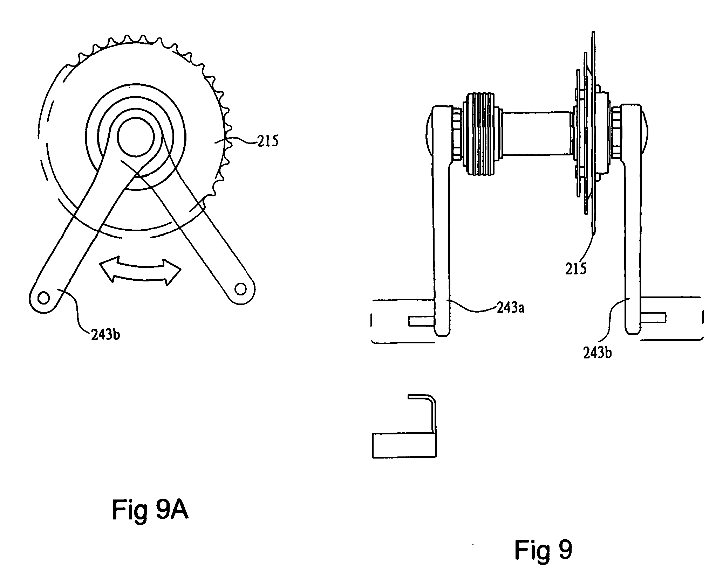

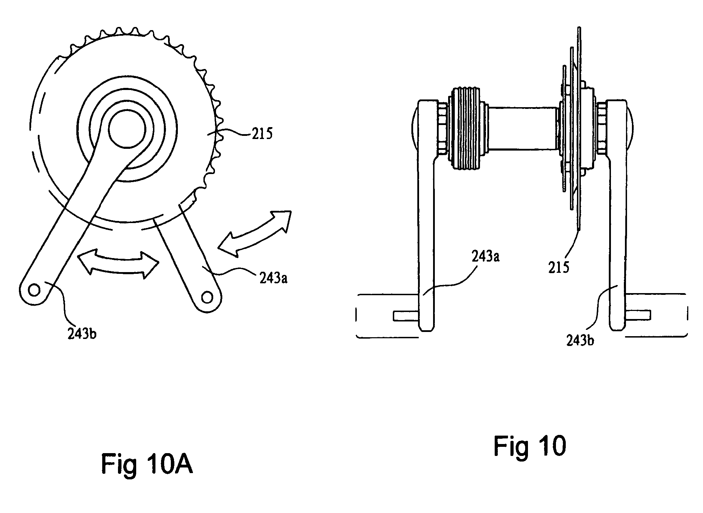

Referring to Figures 8, 8A, 9, 9A, 10, and 10A, the operation of the transmission mechanism will now be described. By manually releasing the pull wire 40, the engaging forks 401a, 401b are allowed to move away from each other, and under the biasing action of the springs 207a, 207b, the clutching rings 224a, 224b are forced into driving engagement with the secondary control blocks 229a, 229b with teeth 2242b of the clutching rings 224a, 224b mating axially extending and circumferentially spaced teeth 2291b of the secondary control block 229a, 229b. Under this situation, which is the exercise mode, besides transmitted through the primary axle 201 to the primary chain wheel 215, the pedaling force or torque from the pedal cranks 243a, 243b is partly transmitted through the clutching ring 224a, 224b and the secondary control blocks 229a, 229b to the secondary chain wheels 308a, 308b of the secondary axle 300 (see Figure 4). Due to the limitation in rotation angle of the secondary chain wheels 308a, 308b imposed by the chains 502, 501a, 501b and also owing to the one-way bearings 240a, the pedal cranks 243a, 243b are allowed to take reciprocal rotation. During a forward (clockwise) rotation, the pedaling torque is transmitted through the primary axle 201 to the primary chain wheel 215 and eventually to the rear hub 50 and during a backward (counterclockwise) rotation, no pedaling torque is transmitted to the primary axle 201 because of the one-way bearing 240a, 240b. Thus, the pedaling force is intermittently transmitted to the primary axle 201 by both pedal cranks 243a, 243b to drive the rear hub 50. In this exercise mode, by making the pedal cranks 243a, 243b to extend in the same direction, which can be done is the independent mode and will be further described, the pedals 502 of the pedal cranks 243a, 243b are allowed to simultaneously move upward or downward, while the cranks 243a, 243b are simultaneously rotated forward or backward.

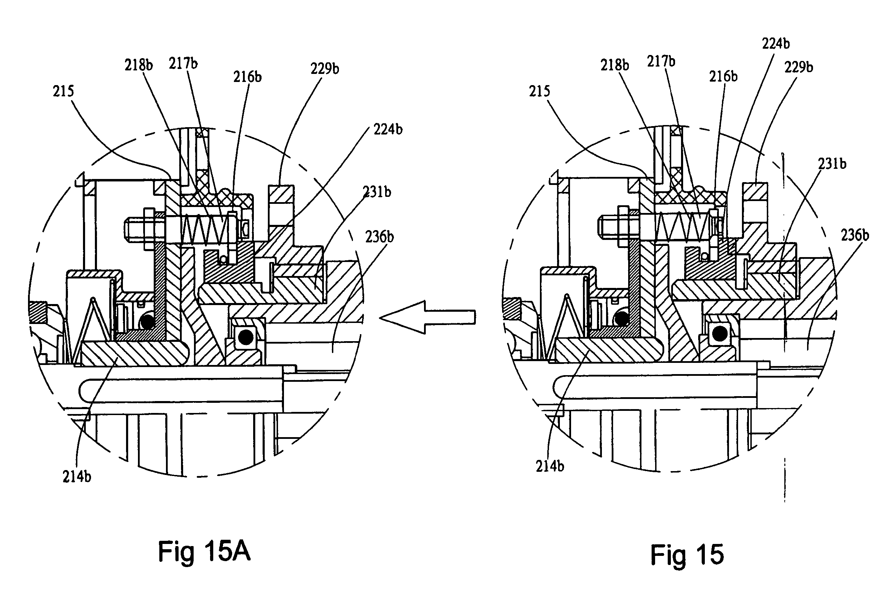

Referring now to Figures 15 and 15A, it is noted that during the backward rotation of the exercise mode, the engagement between the clutching ring 224a, 224b and the secondary control blocks 229a, 229b is subject to reverse rotation due to the fact that the clutching rings 224a, 224b are rotatably fixed to the pedal crank 243a, 243b by the guide cylinders 231a, 231b and also due to the fact that during the backward rotation of the pedal cranks 243a, 243b, the primary axle 201 and thus the primary chain wheel 215 do not follow the backward rotation and are generally held still because of the one-way bearing 240a, 240b. In other words, there is a conflict in rotary motion between the secondary control block 229a, 229b and the primary chain wheel 215.

As shown in Figure 16, when the pedal crank 243b is pedaled in a reciprocated manner, the reversed rotation between the secondary control block 229b and the clutching ring 224b occurs at every half cycle of the pedaling operation of the crank 243b, while the one-way bearing 240b prevents the primary axle 201 and the primary chain wheel 215 from reversed rotation and thus keeping the chain wheel 215 still. The force transmitted between the clutching ring 224b and the secondary control block 229b eventually gets exceeding a camming force acting between each tooth 2242b of the clutching ring 24 and an inclination 2294b formed on the associated tooth 2291b of the secondary control block 229b, which camming force is induced in the axial direction by the biasing element 218b arranged between the clutching ring 224b and the driving disk 215b. Thus, the clutching ring 224b is allowed to move axially against the spring 218b and disengages from the secondary control block 229b to effect idle rotation of the secondary control block 229b. Apparently, no dedicated hub 50 is needed in handling the reversed rotation.

As shown in Figures 8 and 8A, the pedaling force of the pedal cranks 243a, 243b is transmitted to the primary axle 201 via the one-way bearings 240a, 240b, which is in turned converted to the primary chain wheel 215 for driving the rear hub 50. The clutching rings 224a, 224b only serve to set the transmission mechanism in the exercise mode, not to transmit the pedaling force. In other words, the clutching rings 224a, 224b need not be of great strength to bear the pedaling force.

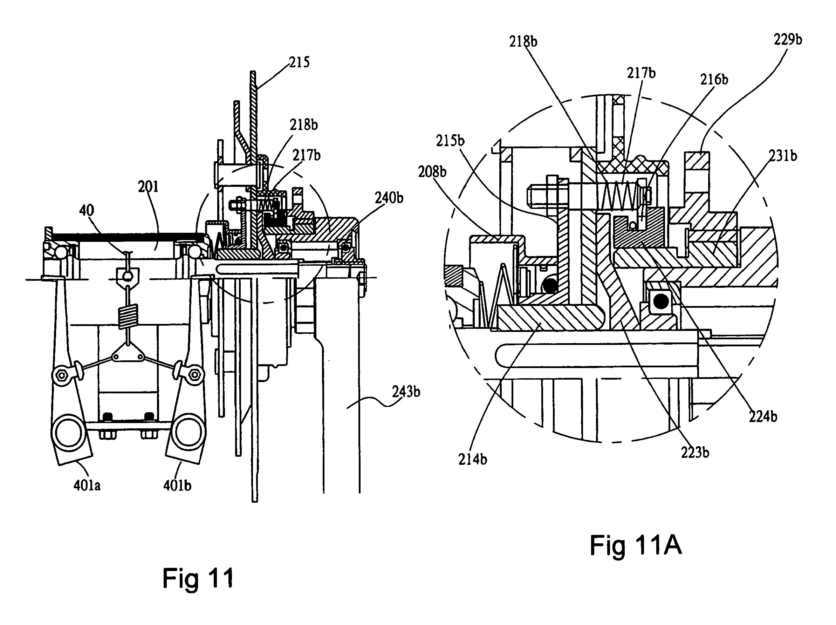

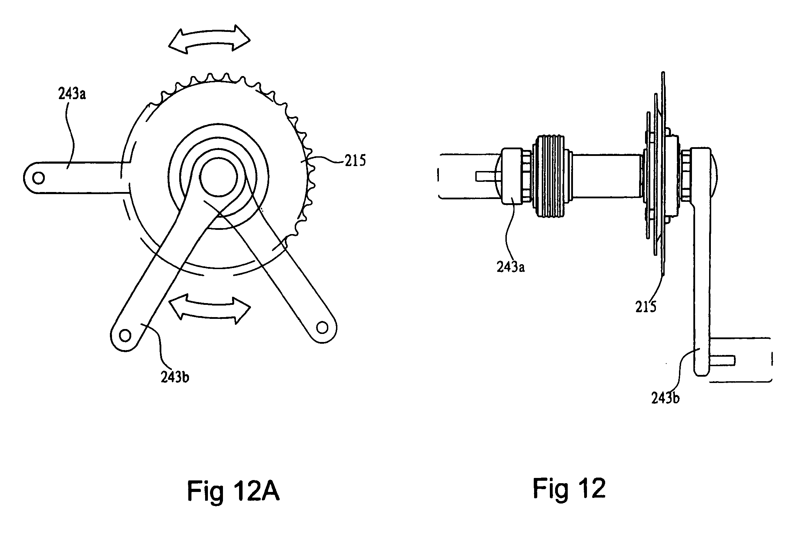

Referring to Figure 11, 11A, 12, and 12A, to switch to the independent mode, the driving collars 2082a, 208b are moved by the pulling wire 40 and the engaging forks 401a, 401b to separate from the secondary control blocks 229a, 229b, and are positioned between the first and second extreme positions where the clutching rings 224a, 224b do not engage both the primary control blocks 223a, 223b and the secondary control blocks 229a, 229b. Consequently, the pedal cranks 243a, 243b are independent of each other in operation, which means the cranks 243a, 243b can be moved separately and the pedaling force of each crank 243a, 243b is independently transmitted to the primary axle 201, which is in turn transmitted to the rear hub 50 through the primary chain wheel 215. The pedal cranks 243a, 243b can be moved simultaneously in the same direction or opposite directions or one pedal crank 243a, 243b is moved while the other one is held still. A variety of combinations of movements of the pedal cranks 243a, 243b can be realized, all providing pedaling power to the rear hub 50 through the primary axle 201 and the primary chain wheel 215.

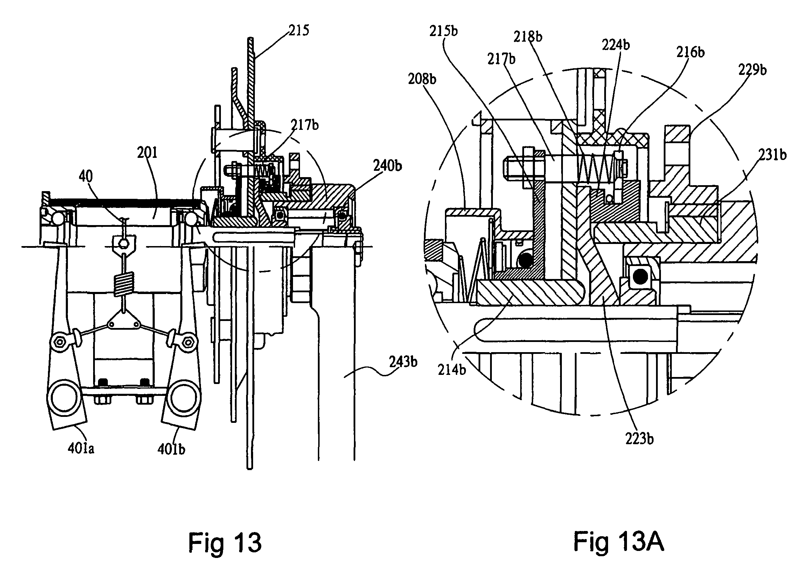

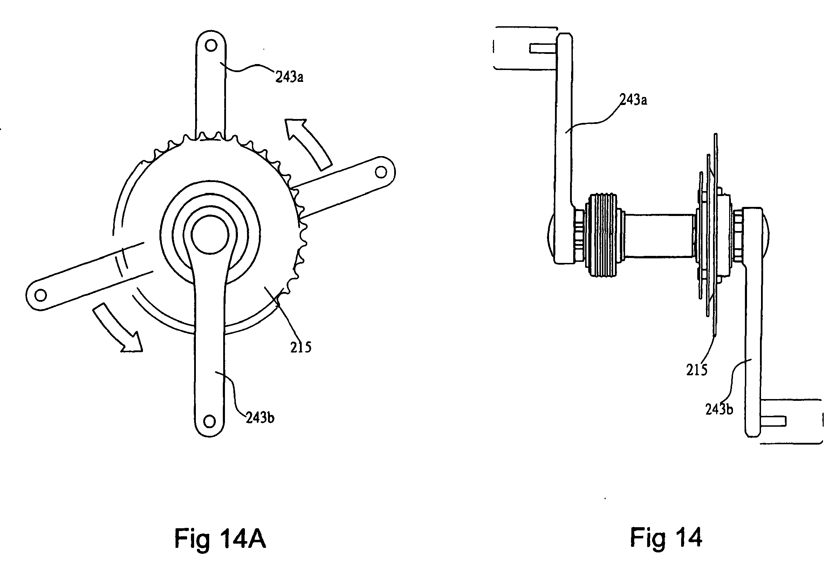

Referring to Figure 13, 13A, 14, and 14A, to switch to the regular mode, the pulling wire 40 is pulled to move the driving collars 2082a, 208b and thus the clutching rings 224a, 224b into engagement with the primary control blocks 223a, 223b to lock the pedal cranks 243a, 243b with the primary axle 201 and thus allowing for continuous forward or backward rotation of the primary axle 201 by the pedals 502. In this mode, it is preferably the pedal cranks 243a, 243b are held in opposite extension directions to effect regular pedaling operation, which provides pedaling force to the primary axle 201 and the primary chain wheels 215 for driving the rear hub 50.

In the operation, by tensioning/releasing the pulling wire 40 to control the engaging forks 401a, 401b for axially shifting the driving collars 2082a, 208b, the clutching rings 224a, 224b is axially moved to selectively engage the primary control blocks 223a, 223b and the secondary control blocks 229a, 229b whereby pedal cranks 243a, 243b can take various combinations of individual movements to supply driving force or pedaling force to the rear hub 50 through the primary axle 201 and the primary chain wheel 215.

The present invention offers the following advantages:

(1) The improved multifunctional pedaling motion bicycle, particularly to a transmission mechanism of the present invention has a simple structure, which allows for a variety of operation modes without a dedicated rear hub, whereby manufacturing costs are low and economic value is enhanced.

(2) The improved multifunctional pedaling motion bicycle, particularly to a transmission mechanism of the present invention is light-weighted, which implies easiness of handling and use.

(3) The improved multifunctional pedaling motion bicycle, particularly to a transmission mechanism of the present invention has low risk of failure, if not failure free, and thus extended service life.

Although the present invention has been described with reference to the preferred embodiments with reference to the drawings thereof, it is apparent to those skilled in the art that a variety of modifications and changes may be made without departing from the scope of the present invention which is intended to be defined by the appended claims.

## Claims

1. Multifunctional pedaling motion bicycle, with a transmission mechanism adapted to be used in a wheeled exercising device having a frame (10), and comprising a primary axle assembly (200) rotatably mounted to the frame (10), a secondary axle assembly (300) mounted to the frame (10) at a location behind the primary axle assembly (200), the secondary axle assembly (300) comprising a secondary axle (301) having opposite ends to which secondary chain wheels (308a, 308b) are mounted, the primary axle assembly (200) comprising a primary axle(201) having opposite ends to which pedal cranks (243a, 243b) are mounted, each of the pedal cranks (243a, 243b) being provided with a one-way bearing (240a, 240b) to couple with the primary axle (201), a primary chain wheel (215) being mounted to the primary axle (201) to drive a rear hub (50), driving collars (208a, 208b) and clutching rings (224a, 224b) being axially mounted on the primary axle (201) and controlled by a control mechanism (400),
**characterized in that**
the control mechanism (400) comprises:
an engaging fork (401a, 401b) in driving engagement with each driving collar (208a, 208b), a connector (407) connected to each engaging fork (401 a, 401 b) with a wire (4071a. 4071 b) and further connected to a manually operable pull wire (40) by a spring (408), the engaging forks (401 a, 401 b) being rotatably mounted to the frame (10); and
a secondary control block (229a, 229b) selectively engageable each clutching ring (224a, 224b) by a biasing force, whereby in condition where the engagement is established between a first tooth (2291 b) of the secondary control block (229b) and a second tooth (2242b) of the clutching ring (224b), when the secondary control block (229b) is set in reversed rotation, a camming force acting between an inclination (2294b) between the first (2291 b) and second (2242b) teeth separates the secondary control block (229b) and the clutching ring (224b) to effect idling rotation of the secondary control block (229b).

2. Multifunctional pedaling motion bicycle, with a transmission mechanism as claimed in claim 1, **characterized by** further comprising a primary control block (223a, 223b) engageable by each clutching ring (224a, 224b) to transmit pedaling force from the pedal crank (243a, 243b) to the rear hub (50).

3. Multifunctional pedaling motion bicycle, with a transmission mechanism as claimed in claim 1, **characterized in that** the driving collar (208a, 208b) is coupled to the clutching ring (224a, 224b) and the clutching ring (224a, 224b) is driven by the driving collar (208a, 208b) to move between the secondary control block (229a, 229b) and a primary control block (223a, 223b).

4. Multifunctional pedaling motion bicycle, with a transmission mechanism as claimed in claim 1, **characterized in that** the connector (407) is connected to each engaging fork (401 a, 401 b) by a wire (4071 a, 4071 b) that is fixed to a connection member (403a, 403b) rotatably fixed to the engaging fork (401 a, 401 b) and the engaging forks (401 a, 401 b) are rotatably attached to a base (406) that is fixed to the frame (10), whereby pulling/releasing the pull wire (40) allows the engaging forks (401 a, 401 b) to move toward/away from each other and thus moving the clutching ring (224a, 224b) between the secondary control block (229a, 229b) and a primary control block (223a, 223b).

5. Multifunctional pedaling motion bicycle, with a transmission mechanism as claimed in claim 1, wherein:
the primary axle (201) is rotatably mounted to the frame (10) and has two axial ends to which the pedal cranks (243a, 243b) are attached by the one-way bearings (240a, 240b) to allow driving coupling to form between the pedal cranks (243a, 243b) and the primary axle (201) in a first rotational direction and breaking the driving coupling when the pedal cranks (243a, 243b) are rotated in a second rotational direction that is opposite to the first rotational direction;
a primary control block (223a, 223b) is rotatably fixed to the primary axle (201) and corresponds to a secondary control block (229a, 229b);
each secondary control block (229a, 229b) is rotatably mounted to the primary axle (201) and is axially spaced from the corresponding primary control block (223a, 223b) by a predetermined distance, the secondary control block (229a, 229b) being in operative coupling with an angle limiter (308a, 308b, 501 a, 501 b);
each clutching ring (224a, 224b) is rotatably fixed to each pedal crank (243a, 243b) and is axially movable with respect to the primary axle (201) between first and second extreme positions to selectively engage the primary control block (223a, 223b) and the secondary control block (229a, 229b) for effecting first and second operation modes, respectively;
the engagement between the secondary control block (229a, 229b) and the clutching ring (224a, 224b) comprises control-block side teeth (2291 b) that are circumferentially spaced and clutching-ring side teeth (226a, 226b, 2242b) that are circumferentially spaced and corresponding to the control-block side teeth (2291b) in angular position whereby the control-block side teeth (2291b) and the clutching-ring side teeth (226a, 226b, 2242b) are engageable with each other when the clutching ring (224a, 224b) is at the second position;
at least one of the clutching-ring side teeth (2242b) and the control-block side teeth (2291 b) comprises a camming inclination(2294b) formed on an end thereof to engage the other one of the clutching-ring side teeth (2242b) and the control-block side teeth (2291 b), and wherein the clutching ring (224a, 224b) is spring biased toward the secondary control block (229a, 229b) to form the engagement between the control-block side teeth (229ab) and the clutching-ring side teeth (2242b), the engagement being breakable by an external torque acting between the secondary control block (229a, 229b) and the clutching ring (224a, 224b) and inducing an axial separation force between the secondary control block (229a, 229b) and the clutching ring (224a, 224b) due to the camming inclination (2294b);
wherein in the first operation mode, the pedal cranks (243a, 243b) are locked to the primary axle (201) by the toothed engagement between the clutching ring (224a, 224b) and the primary control block (223a, 223b), whereby the pedal cranks (243a, 243b) are allowed to do continuous rotation in both the first rotational direction and the second rotational direction, and
wherein in the second operation mode; the pedal cranks (243a, 243b) are coupled to the angle limiter (308a, 308b, 501 a, 501 b) to perform reciprocal rotation within an angular range set by the angle limiter (208a, 308b, 501 a, 501 b).

6. Multifunctional pedaling motion bicycle, with a transmission mechanism as claimed in claim 5, **characterized in that** the clutching ring (224a, 224b) is axially positionable at an intermediate position between the first and second extreme positions, whereby the clutching ring (224a, 224b) disengages from both the primary (223a, 223b) and the secondary (229a, 229b) control blocks to allow independent rotation of the pedal cranks (243a, 243b) with respect to each other.

## Patentansprüche

1. Fahrrad mit multifunktionaler Pedale, mit einem Übertragungsmechanismus, der in einer mit Rädern versehenen Betätigungsvorrichtung benutzt werden kann, die einen Rahmen (10) aufweist, und mit einer primären Achsenanordnung (200), die an dem Rahmen (10) drehbar gelagert ist, einer sekundären Achsenanordnung (300), die an dem Rahmen (10) an einer Stelle hinter der primären Achsenanordnung (200) gelagert ist, wobei die sekundäre Achsenanordnung (300) eine sekundäre Achse (301) mit entgegengesetzten Enden aufweist, an denen sekundäre Kettenräder (308a, 308b) angebracht sind, und wobei die primäre Achsenanordnung (200) eine primäre Achse (201) mit entgegengesetzten Enden besitzt, an denen Pedalkurbeln (243a, 243b) angebracht sind, von denen jede mit einem in einer Richtung arbeitenden Lager (240a, 240b) versehen ist, das mit der primären Achse (201) gekuppelt ist, wobei darüber hinaus ein primäres Kettenrad (215) an der primären Achse (201) angebracht ist, um eine hintere Nabe (50) anzutreiben, sowie Antriebshülsen (208a, 208b) und Kupplungsringe (224a, 224b) auf der primären Achse (201) axial gelagert sind und durch einen Steuermechanismus (400) gesteuert werden, **dadurch gekennzeichnet, daß** der Steuermechanismus (400) eine Eingriffsgabel (401a, 401b) aufweist, die mit jedem Antriebskragen (208a, 208b) in antreibendem Eingriff steht, des weiteren einen Verbinder (407), der mit jeder Eingriffsgabel (401a, 401 b) verbunden ist sowie mit einem Draht (4071 a, 4071 b) und der ferner mit einem manuell betätigbaren Zugdraht (40) durch eine Feder (408) verbunden ist, und wobei die Eingriffsgabeln (401a, 401 b) auf dem Rahmen (10) drehbar gelagert sind; und **gekennzeichnet durch** einen sekundären Steuerblock (229a, 229b), der **durch** eine Federkraft wahlweise mit jedem Kupplungsring (224a, 224b) in Eingriff bringbar ist, um **dadurch** einen Zustand herzustellen, in dem zwischen einem ersten Zahn (2291 b) des sekundären Steuerblocks (229b) und einem zweiten Zahn (2242b) des Kupplungsrings (224b) ein Eingriff erfolgt, und der sekundäre Steuerblock (229b) so eingestellt wird, daß eine umgekehrte Drehung stattfindet, und daß eine Mitnehmerkraft, die zwischen einer Schräge (2294b) zwischen dem ersten Zahn (2291 b) und dem zweiten Zahn (2242b) wirkt, den sekundären Steuerblock (229b) und den Kupplungsring (224b) trennt, um **dadurch** eine Leerlaufdrehung des sekundären Steuerblocks (229b) zu bewirken.

2. Fahrrad mit multifunktionaler Pedale, mit einem Übertragungsmechanismus nach Anspruch 1, **gekennzeichnet durch** einen primären Steuerblock (223a, 223b), der mit jedem Kupplungsring (224a, 224b) in Eingriff bringbar ist, um die Pedalkraft von der Pedalkurbel (243a, 243b) auf die hintere Nabe (50) zu übertragen.

3. Fahrrad mit multifunktionaler Pedale, mit einem Übertragungsmechanismus nach Anspruch 1, **dadurch gekennzeichnet, daß** die Antriebshülse (208a, 208b) mit dem Kupplungsring (224a, 224b) gekuppelt ist, und der Kupplungsring (224a, 224b) von der Antriebshülse (208a, 208b) angetrieben wird, um sich zwischen dem sekundären Steuerblock (229a, 229b) und einem primären Steuerblock (223a, 223b) zu bewegen.

4. Fahrrad mit multifunktionaler Pedale, mit einem Übertragungsmechanismus nach Anspruch 1, **dadurch gekennzeichnet, daß** der Verbinder (407) an jeder Eingriffsgabel (401a, 401b) durch einen Draht (4071a, 4071b) angeschlossen ist, der an einem Verbindungskörper (403a, 403b) befestigt ist, welcher mit der Eingriffsgabel (401a, 401b) drehbar fixiert ist, und daß die Eingriffsgabeln(401a, 401b) an einer Grundplatte (406) drehbar angebracht sind, die an dem Rahmen (10) befestigt ist, wodurch das Ziehen und Loslassen des Zugdrahts (40) ermöglicht wird, um die Eingriffsgabeln (401a, 401b) aufeinander zu bzw. voneinander weg zu bewegen und damit den Kupplungsring (224a, 224b) zwischen dem sekundären Steuerblock (229a, 229b) und einem primären Steuerblock (223a, 223b) zu verschieben.

5. Fahrrad mit multifunktionaler Pedale, mit einem Übertragungsmechanismus nach Anspruch 1, **dadurch gekennzeichnet, daß** die primäre Achse (201) an dem Rahmen (10) drehbar gelagert ist und zwei axiale Enden hat, an denen die Pedalkurbeln (243a, 243b) durch die in einer Richtung arbeitenden Lager (240a, 240b) angebracht sind, um dadurch Antriebskupplungsvorgänge zu ermöglichen, die zwischen den Pedelkurbeln (243a, 243b) und der primären Achse (201) in einer ersten Drehrichtung stattfinden und unterbrochen werden, sobald die Pedalkurbeln (243a, 243b) in einer zweiten Drehrichtung gedreht werden, die der ersten Drehrichtung entgegengesetzt ist; daß ein primärer Steuerblock (223a, 223b) an der primären Achse (201) drehbar befestigt ist und einem sekundären Steuerblock (229a, 229b) entspricht; daß jeder sekundäre Steuerblock (229a, 229b) an der primären Achse (201) drehbar gelagert ist und von dem entsprechenden primären Steuerblock (223a, 223b) um einen vorbestimmten Abstand axial getrennt ist, wobei der sekundäre Steuerblock (229a, 229b) mit einem Winkelbegrenzer (308a, 308, 501a, 501b) betrieblich gekoppelt ist; daß jeder Kupplungsring (224a, 224b) drehbar an jeder Pedalkurbel (243a, 243b) befestigt ist und in Bezug auf die primäre Achse (201) zwischen ersten und zweiten extremen Stellungen axial beweglich ist, um **dadurch** den primären Steuerblock (223a, 223b) und den sekundären Steuerblock (229a, 229b) wahlweise in Eingriff zu bringen, um erste bzw. zweite Betriebsarten zu bewirken; daß der Eingriff zwischen dem sekundären Steuerblock (229a, 229b) und dem Kupplungsring (224a, 224b) steuerblockseitige Zähne (2291b) aufweist, die mit Abstand rund um den Umfang angeordnet sind, sowie kupplungsringseitige Zähne (226a, 226b, 2242b), die mit Abstand rund um den Umfang angeordnet sind und den steuerblockseitigen Zähnen (2291b) bezüglich der Winkellage entsprechen, wodurch die steuerblockseitigen Zähne (2291b) und die kupplungsringseitigen Zähne (226a, 226b, 2242b) miteinander in Eingriff treten, sobald der Kupplungsring (224a, 224b) sich in der zweiten Position befindet; daß wenigstens einer der kupplungsringseitigen Zähne (2242b) und der steuerblockseitigen Zähne (2291b) eine Mitnehmerschräge (2294b) aufweist, die auf einem Steuerblockende ausgebildet ist, um mit den anderen kupplungsringseitigen Zähnen (2242b) und den steuerblockseitigen Zähnen (2291b) in Eingriff zu treten, und daß der Kupplungsring (224a, 224b) unter Federdruck gegen den zweiten Steuerblock (229a, 229b) gepreßt wird, um zwischen den steuerblockseitigen Zähnen (2291b) und den kupplungsringseitigen Zähnen (2242b) den Eingriff herzustellen, der durch eine äußere Drehkraft aufhebbar ist, die zwischen dem Sekundärblock (229a, 229b) und dem Kupplungsring (224a, 224b) wirkt und aufgrund der Mitnehmerschräge (2294b) eine axiale Trennkraft zwischen dem sekundären Steuerblock (229a, 229b) und dem Kupplungsring (224a, 224b) bewirkt; wobei in der ersten Betriebsweise die Pedalkurbeln (243a, 243b) mit der primären Achse (201) durch den gezahnten Eingriff zwischen dem Kupplungsring (224a, 224b) und dem primären Steuerblock (223a, 223b) verriegelt sind, wodurch die Pedalkurbeln (243a, 243b) sich sowohl in der ersten Drehrichtung als auch in der zweiten Drehrichtung ständig drehen können, und in der zweiten Betriebsweise die Pedalkurbeln (243a, 243b) mit dem Winkelbegrenzer (308a, 308b, 501a, 501b) gekoppelt sind, um in einem Winkelbereich, der von dem Winkelbegrenzer (308a, 308b, 501a, 501b) festgelegt wird, eine reziproke Drehbewegung auszuführen.

6. Fahrrad mit multifunktionaler Pedale, mit einem Übertragungsmechanismus nach Anspruch 5, **dadurch gekennzeichnet, daß** der Kupplungsring (224a, 224b) in einer mittleren Stellung zwischen den ersten und zweiten Extrempositionen axial anordbar ist, wodurch der Kupplungsring (224a, 224b) mit dem primären Steuerblock (223a, 223b) und dem sekundären Steuerblock (229a, 229b) außer Eingriff kommt, so daß eine unabhängige Drehung der Pedalkurbeln (243a, 243b) in Bezug aufeinander möglich wird.

## Revendications

1. Bicyclette à mouvement de pédalier multifonctions comprenant un mécanisme de transmission adapté à être utilisé dans un appareil d'exercice sur roues ayant un cadre (10), et comprenant un ensemble à axe primaire (200) monté en rotation sur le cadre (10), un ensemble à axe secondaire (300) monté sur le cadre (10) à un emplacement derrière l'ensemble à axe primaire (200), l'ensemble à axe secondaire (300) comprenant un axe secondaire (301) ayant des extrémités opposées sur lesquelles sont montés des pignons à chaîne secondaires (308a, 308b), l'ensemble à axe primaire (200) comprenant un axe primaire (201) ayant des extrémités opposées sur lesquelles sont montées des bielles de pédale (243a, 243b), chacune des bielles de pédale (243a, 243b) étant pourvue d'un palier unidirectionnel (240a, 240b) pour s'accoupler avec l'axe primaire (201), un pignon à chaîne primaire (215) étant monté sur l'axe primaire (201) pour entraîner un moyeu arrière (50), des colliers d'entraînement (208a, 208b) et des bagues d'embrayage (224a, 224b) qui sont montés axialement sur l'axe primaire (201) et sont commandés par un mécanisme de commande (400),
**caractérisée en ce que**
le mécanisme de commande (400) comprend :
une fourchette d'engagement (401a, 401 b) en engagement d'entraînement avec chaque collier d'entraînement (208a, 208b), un connecteur (407) connecté à chaque fourchette d'engagement (401a, 401b) avec un câble (4071a, 4071b) et étant en outre connecté à un câble de traction (40) à actionnement manuel par un ressort (408), les fourchettes d'engagement (401a, 401b) étant montées en rotation sur le cadre (10) ; et
un bloc de commande secondaire (229a, 229b) capable d'engager sélectivement chaque bague d'embrayage (224a, 224b) par une force de sollicitation, grâce à quoi, dans une condition dans laquelle l'engagement est établi entre une première dent (2291 b) du bloc de commande secondaire (229b) et une seconde dent (2242b) de la bague d'embrayage (224b), quand le bloc de commande secondaire (229b) est mis en rotation inverse, une force d'engagement agissant entre une inclinaison (2294b) entre la première dent (2291b) et la seconde dent (2242b) sépare le bloc de commande secondaire (229b) et la bague d'embrayage (224b) pour effectuer une rotation à vide du bloc de commande secondaire (229b).

2. Bicyclette à mouvement de pédalier multifonctions, comprenant un mécanisme de transmission selon la revendication 1, **caractérisée en ce qu'**elle comprend en outre un bloc de commande primaire (223a, 223b) susceptible d'être engagé par chaque bague d'embrayage (224a, 224b) pour transmettre une force de pédalage depuis la bielle de pédale (243a, 243b) vers le moyeu arrière (50).

3. Bicyclette à mouvement de pédalier multifonctions, comprenant un mécanisme de transmission selon la revendication 1, **caractérisée en ce que** le collier d'entraînement (208a, 208b) est couplé à la bague d'embrayage (224a, 224b) et la bague d'embrayage (224a, 224b) est entraînée par le collier d'entraînement (208a, 208b) pour se déplacer entre le bloc de commande secondaire (229a, 229b) et un bloc de commande primaire (223a, 223b)

4. Bicyclette à mouvement de pédalier multifonctions, comprenant un mécanisme de transmission selon la revendication 1, **caractérisée en ce que** le connecteur (407) est connecté à chaque fourchette d'engagement (401 a, 401 b) par un câble (4071a, 4071b) qui est fixé à un élément de connexion (403a, 403b) fixé en rotation sur la fourchette d'engagement (401a, 401 b), et les fourchettes d'engagement (401a, 401 b) sont attachées en rotation sur une base (406) qui est fixée au cadre (10), grâce à quoi une traction/relâchement du câble de traction (40) permet aux fourchettes d'engagement (401a, 401 b) de se déplacer en rapprochement/éloignement l'une de l'autre et donc un mouvement de la bague d'embrayage (224a, 224b) entre le bloc de commande secondaire (229a, 229b) et un bloc de commande primaire (223a, 223b).

5. Bicyclette à mouvement de pédalier multifonctions, comprenant un mécanisme de transmission selon la revendication 1, dans laquelle :
l'axe primaire (201) est monté en rotation sur le cadre (10) et possède deux extrémités axiales sur lesquelles sont attachées les bielles de pédale (243a, 243b) par les paliers unidirectionnels (240a, 240b) pour permettre la formation d'un accouplement d'entraînement entre les bielles de pédale (243a, 243b) et l'axe primaire (201) dans une première direction de rotation et la cessation de l'accouplement d'entraînement quand les bielles de pédale (243a, 243b) sont mises en rotation dans une seconde direction de rotation opposée à la première direction de rotation ;
un bloc de commande primaire (223a, 223b) est fixé en rotation sur l'axe primaire (201) et correspond à un bloc de commande secondaire (229a, 229b) ; chaque bloc de commande secondaire (229a, 229b) est monté en rotation sur l'axe primaire (201) et est axialement espacé depuis le bloc de commande primaire correspondant (223a, 223b) d'une distance prédéterminée, le bloc de commande secondaire (229a, 229b) étant en accouplement fonctionnel avec un limiteur d'angle (308a, 308b, 501a, 501b) ;
chaque bague d'embrayage (224a, 224b) est fixée en rotation sur chaque bielle de pédale (243a, 243b) et est axialement mobile par rapport à l'axe primaire (201) entre une première et une seconde position extrême pour engager sélectivement le bloc de commande primaire (223a, 223b) et le bloc de commande secondaire (229a, 229b) et effectuer un premier et un second mode de fonctionnement respectivement ;
l'engagement entre le bloc de commande secondaire (229a, 229b) et la bague d'embrayage (224a, 224b) comprend des dents latérales (2291b) sur le bloc de commande, qui sont circonférentiellement espacées, et des dents latérales (226a, 226b, 2242b) sur la bague d'embrayage, qui sont circonférentiellement espacées et qui correspondent aux dents latérales (2291b) sur le bloc de commande en position angulaire grâce à quoi les dents latérales (2291 b) sur le bloc de commande et les dents latérales (226a, 226b, 2242b) sur la bague d'embrayage sont susceptibles d'être engagées les unes avec les autres quand la bague d'embrayage (224a, 224b) est à la seconde position ;
l'une au moins parmi les dents latérales (2242b) sur la bague d'embrayage et les dents latérales (2291 b) sur le bloc de commande comprend une inclinaison d'engagement (2294b) formée sur l'une de ses extrémités pour engager l'autre parmi les dents latérales (2242b) sur la bague d'embrayage et les dents latérales (2291 b) sur le bloc de commande, et dans laquelle la bague d'embrayage (224a, 224b) est sollicitée par un ressort vers le bloc de commande secondaire (229a, 229b) pour former l'engagement entre les dents latérales (229ab) sur le bloc de commande et les dents latérales (2242b) sur la bague d'embrayage, l'engagement pouvant être interrompu par un couple externe agissant entre le bloc de commande secondaire (229a, 229b) et la bague d'embrayage (224a, 224b) et induisant une force de séparation axiale entre le bloc de commande secondaire (229a, 229b) et la bague d'embrayage (224a, 224b) en raison de l'inclinaison d'engagement (2294b) ;
dans laquelle, dans le premier mode de fonctionnement, les bielles de pédale (243a. 243b) sont bloquées sur l'axe primaire (201) à l'engagement denté entre la bague d'embrayage (224a, 224b) et le bloc de commande primaire (223a, 223b), grâce à quoi les bielles de pédale (243a, 243b) sont libres d'effectuer une rotation continue à la fois dans la première direction de rotation et dans la seconde direction de rotation, et
dans laquelle, dans le second mode de fonctionnement, les bielles de pédale (243a, 243b) sont couplées au limiteur d'angle (308a, 308b, 501a, sols) pour effectuer une rotation réciproque avec une plage angulaire fixée par le limiteur d'angle (308a, 308b, 501a, 501b).

6. Bicyclette à mouvement de pédalier multifonctions, comprenant un mécanisme de transmission selon la revendication 5, **caractérisé en ce que** la bague d'embrayage (224a, 224b) est susceptible d'être positionnée axialement à une position intermédiaire entre la première et la seconde position extrême, grâce à quoi la bague d'embrayage (224a, 224b) se dégage à la fois vis-à-vis du bloc de commande primaire (223a, 223b) et du bloc de commande secondaire (229a, 229b) pour permettre une rotation indépendante des bielles de pédale (243a, 243b) l'une par rapport à l'autre.
